# EUROPÄISCHE PATENTSCHRIFT

(11) **EP 1 083 763 B1**
(45) Veröffentlichungstag und Bekanntmachung des Hinweises auf die Patenterteilung: **02.03.2005**
(21) Anmeldenummer: 00118330.0
(22) Anmeldetag: 24.08.2000
(51) Int. Cl.: H04Q 7/32, H04M 1/65

(54) **Mobiles Telekommunikationsendgerät mit Speicher**
Mobile telecommunication device with storage
Dispositif de télécommunication mobile avec mémoire

(30) Priorität: 08.09.1999 DE 19942843
(43) Veröffentlichungstag der Anmeldung: 14.03.2001
(73) Patentinhaber: ROBERT BOSCH GMBH, 70442 Stuttgart (DE)
(72) Erfinder: Hasemann, Joerg-Michael, 27339 Riede (DE)

(56) Entgegenhaltungen:
- EP-A- 0 757 469
- WO-A-98/11745
- WO-A-99/43136
- DE-A- 19 737 354
- US-A- 5 333 176

## Beschreibung

### Stand der Technik

Die Erfindung geht von einem mobilen Telekommunikationsendgerät nach der Gattung des Hauptanspruchs aus.

Es sind bereits mobile Telekommunikationsendgeräte in Form von Mobiltelefonen bekannt, die eine drahtlose Empfangsvorrichtung zum Empfang von über ein Funktelekommunikationsnetz übertragenen Signalen, beispielsweise von Audiosignalen, und eine Wiedergabevorrichtung, beispielsweise einen Lautsprecher, zur Wiedergabe dieser Signale umfassen.

Aus der US 5,333,176 ist ein zellulares Telefonsystem mit Sprachspeichermöglichkeiten bekannt, die es einem zellularen Handapparat ermöglichen, Anrufbeantworterfunktionen wahrzunehmen. Zu diesem Zweck sind Audioaufnahme- und Audiowiedergabefunktionen vorgesehen. Diese Funktionen sind nur ausführbar, wenn der Handapparat nicht für eine Gesprächsverbindung aktiviert ist. Zu Aufnahmezwecken ist ein statischer RAM vorgesehen.

Die DE 197 37354 A1 offenbart ein schnurloses Video-Kommunikationsendgerät, bei dem eine Videokamera und eine Audio-Einheit zum Bilden von Audio- und Video-Informationen sowie eine Komprimierungseinheit zum Komprimieren der Audio- und Video-Informationen gemäß einem standardisierten Komprimierungsverfahren und eine gemäß einem standardisierten Übertragungsverfahren ausgestattete Funkeinheit zum Übermitteln der komprimierten Audio- und Video-Informationen vorgesehen sind. Das Dokument WO9943136 offenbart ein System in dem ein Mobiltelefon mit Unterhaltungsmodul, bei dem eingehende Rufe entweder, unter unmittelbarer Abschaltung der Wiedergabe, signalisiert werden oder abgeblockt werden. Dokument DD294149 A5 offenbart ein Mobiltelefon mit Bandgerät, das wechselweise sowohl zur Wiedergabe von Daten als auch als Anrufbeantworter genutzt werden kann.

### Vorteile der Erfindung

Das erfindungsgemäße mobile Telekommunikationsendgerät mit den Merkmalen des Hauptanspruchs hat demgegenüber den Vorteil, dass ein Massenspeicher vorgesehen ist, dem die empfangenen Signale vor einer Wiedergabe zur Zwischenspeicherung zuführbar sind. Auf diese Weise ist es möglich, im mobilen Telekommunikationsendgerät signifikante Mengen an Audio-, Video- und/oder Datensignalen abzuspeichern. Somit kann das mobile Telekommunikationsendgerät multifunktional zum Empfangen, Abspeichern und Wiedergeben von Multimediainformationen eingesetzt werden, ohne daß zusätzliche Vorrichtungen oder Geräte erforderlich sind. Durch die auf diese Weise gegebene Möglichkeit, zeitversetzt multimediale Informationen in Form von Audio-, Video- und/oder Datensignalen empfangen, speichern und wiedergeben zu können, lassen sich solche Informationen auch sinnvoll über schmalbandige Verbindungen übertragen. Der Benutzer des mobilen Telekommunikationsendgerätes kann die übertragenen Informationen dann zu einem späteren Zeitpunkt an der Wiedergabevorrichtung anschauen oder anhören, wenn die Informationen vollständig im Massenspeicher gespeichert sind. Multimediale Informationen lassen sich somit über schmalbandige Verbindungen zum mobilen Telekommunikationsendgerät übertragen, ohne daß bei der Wiedergabe dieser Informationen am mobilen Telekommunikationsendgerät Qualitätseinbußen in Kauf genommen werden müssen.

Ein weiterer Vorteil besteht darin, daß das mobile Telekommunikationsendgerät durch die Integration des Massenspeichers auch die Funktionalität von bisher separat ausgeführten Audio-, Video- und/oder Datenwiedergabegeräten in sich vereinen kann. So kann das mobile Telekommunikationsendgerät bei im Massenspeicher aufgezeichneten und vom Funktelekommunikationsnetz empfangenen Audiodaten die Funktion eines Walkman beispielsweise zur Wiedergabe von Musikstücken umfassen. Bei im Massenspeicher gespeicherten Videosignalen kann das mobile Telekommunikationsendgerät die Funktion eines Videorecorders zur Wiedergabe von über das Funktelekommunikationsnetz empfangenen und im Massenspeicher aufgezeichneten Videodaten umfassen. Entsprechend kann das mobile Telekommunikationsendgerät bei im Massenspeicher aufgezeichneten und vom Funktelekommunikationsnetz empfangenen Datensignalen die Funktion eines Datenrecorders umfassen. Somit läßt sich also im mobilen Telekommunikationsendgerät die Funktionalität eines Walkman, eines Videorecorders und/oder eines Datenrecorders vereinen.

Durch die in den Unteransprüchen aufgeführten Maßnahmen sind vorteilhafte Weiterbildungen und Verbesserungen des im Hauptanspruch angegebenen mobilen Telekommunikationsendgerätes möglich.

Besonders vorteilhaft ist es, daß vor der Speicherung im Massenspeicher eine Komprimierung der empfangenen Signale erfolgt. Auf diese Weise lassen sich mehr Signale im Massenspeicher speichern.

Ein weiterer Vorteil besteht darin, daß eine drahtgebundene Empfangsschnittstelle zum Anschluß einer Audiosignalquelle, einer Videosignalquelle und/oder einer Datensignalquelle vorgesehen ist, über die Audio-, Video- und/oder Datensignale dem Massenspeicher zuführbar und an der Wiedergabevorrichtung wiedergebbar sind. Auf diese Weise wird die Funktionalität des mobilen Telekommunikationsendgerätes erweitert, so daß es zur Aufnahme der Audio-, Video- und/oder Datensignale nicht auf den Empfang dieser Signale vom Funktelekommunikationsnetz angewiesen ist. Das mobile Telekommunikationsendgerät läßt sich somit auch als herkömmlicher Audio-, Video- und/oder Datenrecorder einsetzen.

Ein weiterer Vorteil besteht darin, daß eine Audio- und/oder eine Videoaufnahmevorrichtung vorgesehen ist, mit der Audiound/oder Videosignale aufnehmbar sind, und daß die aufgenommenen Audio- und/oder Videosignale vor einer Wiedergabe an der Wiedergabevorrichtung im Massenspeicher zwischenspeicherbar sind. Auf diese Weise wird die Funktionalität des mobilen Telekommunikationsendgerätes weiter erhöht, da nun das mobile Telekommunikationsendgerät selbst als Audio- und/oder Videosignalquelle einsetzbar ist.

Ein weiterer Vorteil besteht auch darin, daß eine drahtlose Sendevorrichtung vorgesehen ist, über die im Massenspeicher abgelegte Video-, Audio- und/oder Datensignale an das Funktelekommunikationsnetz abgebbar sind. Auf diese Weise wird die Funktionalität des mobilen Telekommunikationsendgerätes weiter erhöht und das mobile Telekommunikationendgerät zu einem vollwertigen Multimediateilnehmer des Funktelekommunikationsnetzes ausgebaut.

Ein weiterer Vorteil besteht auch darin, daß eine drahtgebundene Sendeschnittstelle zum Anschluß an eine Videosignalsenke, eine Audiosignalsenke und/oder eine Datensignalsenke vorgesehen ist und daß der Videosignalsenke, der Audiosignalsenke und/oder der Datensignalsenke im Massenspeicher abgelegte Video-, Audiound/oder Datensignale zuführbar sind. Auf diese Weise wird die Funktionalität des mobilen Telekommunikationsendgerätes ebenfalls erweitert, so daß das mobile Telekommunikationsendgerät auch im Hinblick auf herkömmliche und nicht über das Funktelekommunikationsnetz erreichbare Audio-, Video- und/oder Datengeräte multimedial einsetzbar ist.

Ein weiterer Vorteil besteht darin, daß eine Anrufbeantwortervorrichtung vorgesehen ist, die in einem aktivierten Zustand den eingehenden Ruf automatisch entgegennimmt und Signale des eingehenden Rufes dem Massenspeicher zuführt. Auf diese Weise ist es möglich, gleichzeitig im Massenspeicher abgelegte, und vom eingehenden Ruf unabhängige Signale an der Wiedergabevorrichtung wiederzugeben und Signale des eingehenden Rufes für eine spätere Wiedergabe im Massenspeicher zu speichern.

### Zeichnung

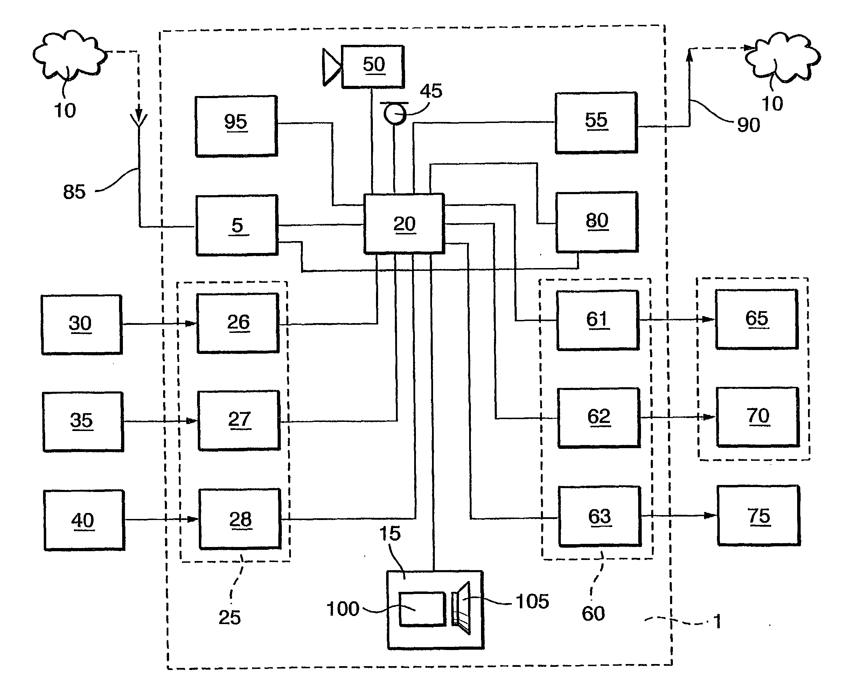

Ein Ausführungsbeispiel der Erfindung ist in der Zeichnung dargestellt und in der nachfolgenden Beschreibung näher erläutert. Es zeigt die einzige Figur ein Blockschaltbild eines erfindungsgemäßen mobilen Telekommunikationsendgerätes.

### Beschreibung des Ausführungsbeispiels

In der Figur kennzeichnet 1 ein mobiles Telekommunikationsendgerät, das im folgenden beispielhaft als Mobiltelefon ausgebildet sein soll. Das Mobiltelefon 1 umfaßt eine drahtlose Empfangsvorrichtung 5, an die eine Empfangsantenne 85 zum Empfang von Signalen aus einem Funktelekommunikationsnetz 10 angeschlossen ist. Das Mobiltelefon 1 umfaßt weiterhin eine drahtlose Sendevorrichtung 55, an die eine Sendeantenne 90 zum Absenden von Signalen an das Funktelekommunikationsnetz 10 angeschlossen ist. Die drahtlose Empfangsvorrichtung 5 und die drahtlose Sendevorrichtung 55 sind an einen Massenspeicher 20 angeschlossen, der als Festplatte oder als Bandspeicher ausgebildet sein kann. Der Massenspeicher 20 kann jedoch auch sowohl eine Festplatte als auch einen Bandspeicher umfassen. Er kann insbesondere als Flash-Speicher ausgebildet sein, der durch einen einzigen Löschimpuls vollständig elektronisch gelöscht werden kann. Die Speicherkapazität des Massenspeichers 20 kann dabei beispielsweise in einem Bereich von 300 bis 1500 MByte liegen. Da in Zukunft mit weiter sinkenden Preisen und zunehmender Miniaturisierung von Speicherkapazität zu rechnen ist, kann vor allem in Zukunft auch eine größere Speicherkapazität als die beschriebene vorgesehen und zu marktfähigen Kosten realisierbar gemacht werden. Über das Funktelekommunikationsnetz 10 können Audiosignale, Videosignale und/oder Datensignale an die drahtlose Empfangsvorrichtung 5 über die Empfangsantenne 85 übertragen und zur Speicherung an den Massenspeicher 20 weitergeleitet werden. Dabei kann es vorgesehen sein, die Daten vor der Speicherung im Massenspeicher 20 bereits in der drahtlosen Empfangsvorrichtung 5 oder einem zwischen die drahtlose Empfangsvorrichtung 5 und den Massenspeicher 20 geschaltete und in der Figur nicht dargestellte Kompressionsvorrichtung zu komprimieren, um Speicherplatz im Massenspeicher 20 für die Speicherung der empfangenen Signale zu sparen. Der Massenspeicher 20 soll dabei die Speicherung von Audiosignalen, beispielsweise von Sprach- und/oder Musiksignalen in einem Bereich von 1 bis 2 Stunden und von Videosignalen in einem Bereich von beispielsweise 30 bis 90 Minuten ermöglichen. Gemäß der Figur ist an den Massenspeicher 20 eine Wiedergabevorrichtung 15 angeschlossen, die eine Wiedergabe der im Massenspeicher 20 gespeicherten Signale ermöglichen soll. Dazu kann die Wiedergabevorrichtung 15 eine Anzeigevorrichtung 100, beispielsweise in Form eines Displays, zur Wiedergabe von im Massenspeicher 20 gespeicherten Videosignalen und/oder Datensignalen sowie einen Lautsprecher 105 zur Wiedergabe von im Massenspeicher 20 gespeicherten Audiosignalen umfassen. Der Massenspeicher 20 kann somit zur Zwischenspeicherung von über die drahtlose Empfangsvorrichtung 5 aus dem Funktelekommunikationsnetz 10 empfangenen Audio-, Video- und/oder Datensignalen vor einer Wiedergabe an der Wiedergabevorrichtung 15 dienen. Die Wiedergabe an der Wiedergabevorrichtung 15 kann dabei durch eine Eingabe eines Benutzers des Mobiltelefons 1 an einer Eingabeeinheit 95 veranlaßt werden, wobei die Eingabeeinheit 95 ebenfalls an den Massenspeicher 20 angeschlossen ist.

Für den Fall, daß die drahtlose Empfangsvorrichtung 5 aus dem Funktelekommunikationsnetz 10 Audiosignale, beispielsweise in Form von Musikstücken empfängt und im Massenspeicher 20 ablegt, kann das Mobiltelefon 1 als Walkman eingesetzt werden, indem eine wiederholte Wiedergabe der im Massenspeicher 20 gespeicherten Audiosignale am Lautsprecher 105 der Wiedergabevorrichtung 15 veranlaßt wird. Mittels der Eingabeeinheit 95 können dabei bestimmte im Massenspeicher 20 abgelegte Audiosignalgruppen oder Musikstücke gesucht und zur Wiedergabe am Lautsprecher 105 der Wiedergabevorrichtung 15 gebracht werden. Der Lautsprecher 105 kann dabei auch in einem an das Mobiltelefon 1 angeschlossenen Kopfhörer oder Ohrhörer angeordnet sein. Es können auch zwei Lautsprecher für eine Wiedergabe in Stereoqualität vorgesehen sein. Die Übertragung der Audiosignale vom Funktelekommunikationsnetz 10 zur drahtlosen Empfangsvorrichtung 5 und die anschließende Aufnahme der Audiosignale im Massenspeicher 20 kann aber muß nicht in Echtzeit erfolgen. Je nach zur Verfügung stehender Bandbreite der Telekommunikationsverbindung kann die Funkübertragung und Aufnahme der Audiosignale im Massenspeicher 20 auch schneller oder langsamer als in Echtzeit erfolgen.

Für den Fall, daß die drahtlose Empfangsvorrichtung 5 vom Funktelekommunikationsnetz 10 Videosignale, beispielsweise in Form von Videoclips, empfängt und im Massenspeicher 20 abspeichert, läßt sich das Mobiltelefon 1 als Videorecorder benutzen. Die im Massenspeicher 20 abgespeicherten Videosignale oder Videoclips können dann wiederholt an der Anzeigevorrichtung 100 wiedergegeben werden, wobei der Benutzer des Mobiltelefons 1 mittels der Eingabeeinheit 95 einen im Massenspeicher 20 gespeicherten Videoclip suchen und zur Wiedergabe an der Anzeigevorrichtung 100 bringen kann. Die Übertragung der Videosignale vom Funktelekommunikationsnetz 10 zur drahtlosen Empfangsvorrichtung 5 und die Aufnahme der Videosignale im Massenspeicher 20 kann dabei in Echtzeit erfolgen. Die Übertragung und Aufnahme der Videosignale kann jedoch auch schneller oder langsamer als in Echtzeit erfolgen, je nach zur Verfügung stehender Bandbreite der Telekommunikationsverbindung. Die Audiosignale und/oder die Videosignale werden vorzugsweise digital vom Funktelekommunikationsnetz 10 an die drahtlose Empfangsvorrichtung 5 übertragen und im Massenspeicher 20 abgespeichert. Es ist jedoch auch eine analoge Übertragung der Audio- und/oder Videosignale zur drahtlosen Empfangsvorrichtung 5 möglich. Die analogen Audio- und/oder Videosignale können dann vor Speicherung im Massenspeicher 20 durch einen in der Figur nicht dargestellten Analog-/Digitalwandler in digitale Signale umgewandelt und im Massenspeicher 20 abgespeichert werden. Es kann jedoch auch vorgesehen sein, daß die analog übertragenen Audio- und/oder Videosignale analog im Massenspeicher 20 abgespeichert werden, vorzugsweise dann, wenn für den Massenspeicher 20 ein Bandspeicher verwendet wird.

Für den Fall, daß die drahtlose Empfangsvorrichtung 5 vom Funktelekommunikationsnetz 10 Datensignale empfängt und im Massenspeicher 20 abspeichert, kann das Mobiltelefon 1 als Datenrecorder benutzt werden. Auf diese Weise können beispielsweise Softwareprogramme vom Internet über das Funktelekommunikationsnetz 10 in den Massenspeicher 20 heruntergeladen werden. Die Übertragung und Speicherung der Datensignale erfolgt dabei vorzugsweise digital. Dabei können die Datensignale in der beschriebenen Weise vom Benutzer mittels der Eingabeeinheit 95 auch wiederholt zur Darstellung an der Anzeigevorrichtung 100 gebracht werden, wobei der Benutzer mittels der Eingabeeinheit 95 auch bestimmte Datensignale im Massenspeicher 20 suchen und zur Wiedergabe an der Anzeigevorrichtung 100 bringen kann. Auch die Datensignale können in Echtzeit vom Funktelekommunikationsnetz 10 zur drahtlosen Empfangsvorrichtung 5 übertragen und im Massenspeicher 20 abgespeichert werden. Je nach zur Verfügung stehender Bandbreite der Telekommunikationsverbindung kann die Übertragung und Abspeicherung der Datensignale aber auch schneller oder langsamer als in Echtzeit erfolgen.

Das Mobiltelefon 1 stellt weiterhin ein vollwertiges Telefon dar. Es ist aber mehr als ein solches, da es Walkman-, Videorecorder- und/oder Datenrecorderfunktionen in sich mit aufnimmt. Es könnte beispielsweise wie ein Walkman mittels eines Halteclips an einem Gürtel des Benutzers getragen werden und die Bauform eines Walkman aufweisen.

Bei einem normalen Telefongespräch werden vom Funktelekommunikationsnetz 10 in der drahtlosen Empfangsvorrichtung 5 empfangene Sprachsignale transparent durch den Massenspeicher 20 ohne Zwischenspeicherung an den Lautsprecher 105 zur akustischen Wiedergabe durchgereicht. Entsprechend werden vom Benutzer des Mobiltelefons 1 an einer Audioaufnahmevorrichtung 45, beispielsweise einem Mikrophon, eingegebene Sprachsignale der drahtlosen Sendevorrichtung 55 zur Abstrahlung an das Funktelekommunikationsnetz 10 über die Sendeantenne 90 abgegeben. Dabei können die Empfangsantenne 85 und die Sendeantenne 90 auch als gemeinsame Sende-/Empfangsantenne ausgeführt sein. Die für die Verarbeitung der empfangenen bzw. abzusendenden Sprachsignale erforderlichen Bauteile des Mobiltelefons 1 sind der Übersichtlichkeit halber in der Figur nicht dargestellt und beispielsweise in der drahtlosen Empfangsvorrichtung 5 bzw. in der drahtlosen Sendevorrichtung 55 angeordnet. Ein herkömmliches Telefongespräch wird dabei durch Signalisierung eines eingehenden Rufes mittels Tonruf bzw. durch Eingabe einer Rufnummer an der Eingabeeinheit 95 für einen abgehenden Ruf eingeleitet.

Mit der bislang beschriebenen Anordnung läßt sich das Grundprinzip der Erfindung realisieren. Gemäß der Figur sind noch einige Weiterbildungen des erfindungsgemäßen Mobiltelefons 1 dargestellt. Dazu kann das Mobiltelefon 1 eine erste drahtgebundene Empfangsschnittstelle 26 für Audiosignale umfassen, die an den Massenspeicher 20 angeschlossen ist und an die eine Audiosignalquelle 30 anschließbar ist. Somit können Audiosignale auch über die erste drahtgebundene Empfangsschnittstelle 26 an den Massenspeicher 20 übertragen und dort abgespeichert werden, wobei es sich bei der Audiosignalquelle 30 beispielsweise um eine Stereoanlage handeln kann. Zusätzlich oder alternativ kann weiterhin eine zweite drahtgebundene Empfangsschnittstelle 27 für Videosignale im Mobiltelefon 1 vorgesehen sein, die ebenfalls an den Massenspeicher 20 angeschlossen ist und an die eine Videosignalquelle 35 anschließbar ist. Somit können Videosignale auch über die zweite drahtgebundene Empfangsschnittstelle 27 an den Massenspeicher 20 übertragen und dort gespeichert werden. Bei der Videosignalquelle 35 kann es sich dabei beispielsweise um einen Fernsehtuner, einen Satellitenempfänger, einen Multimedia-Personalcomputer oder dergleichen handeln.

Zusätzlich oder alternativ kann das Mobiltelefon 1 eine dritte drahtgebundene Empfangsschnittstelle 28 für Datensignale umfassen, die ebenfalls an den Massenspeicher 20 angeschlossen ist und an die eine Datensignalquelle 40 anschließbar ist. Auf diese Weise können Datensignale auch über die dritte drahtgebundene Empfangsschnittstelle 28 an den Massenspeicher 20 übertragen und dort gespeichert werden. Bei der Datensignalquelle 40 kann es sich beispielsweise um einen Personal-Computer handeln.

Die im Mobiltelefon 1 vorhandenen drahtgebundenen Empfangsschnittstellen 26, 27, 28 können in einer gemeinsamen drahtgebundenen Empfangsschnittstellengruppe 25 angeordnet sein.

Weiterhin kann es vorgesehen sein, daß das Mobiltelefon 1 selbst eine Audiosignalquelle in Form der Audioaufnahmevorrichtung 45 aufweist, die beispielsweise als Mikrophon ausgebildet und an den Massenspeicher 20 angeschlossen ist. Somit können von der Audioaufnahmevorrichtung 45 aufgenommene Audiosignale direkt an den Massenspeicher 20 übertragen und dort abgespeichert werden. Wird die Audioaufnahmevorrichtung 45 zur Durchführung eines herkömmlichen Telefongesprächs verwendet, so werden die an der Audioaufnahmevorrichtung 45 vom Benutzer eingegebenen Sprachsignale transparent durch den Massenspeicher 20 an die Sendevorrichtung 55 durchgereicht und von dort an das Funktelekommunikationsnetz 10 über die Sendeantenne 90 abgestrahlt.

Zusätzlich zur Audioaufnahmevorrichtung 45 kann das Mobiltelefon 1 eine Videoaufnahmevorrichtung 50 umfassen, die ebenfalls an den Massenspeicher 20 angeschlossen ist. Die Videoaufnahmevorrichtung 50 kann beispielsweise als Kamera ausgebildet sein. Von der Videoaufnahmevorrichtung 50 aufgenommene Videosignale werden dann ebenfalls direkt an den Massenspeicher 20 übertragen und dort abgespeichert.

Für die im Massenspeicher 20 abgespeicherten Audio-, Videound/oder Datensignale sind mehrere Arten der Weiterverarbeitung möglich.

Neben der bereits beschriebenen Wiedergabe dieser Signale an der Wiedergabevorrichtung 15 kann es zusätzlich vorgesehen sein, diese Signale über die drahtlose Sendevorrichtung 55 und die Sendeantenne 90 an einen weiteren Teilnehmer des Funktelekommunikationsnetzes 10 abzusetzen. Es kann auch nur ein Teil der im Massenspeicher 20 gespeicherten Signale über die drahtlose Sendevorrichtung 55 an einen Teilnehmer des Funktelekommunikationsnetzes 10 abgesetzt werden. Zusätzlich oder alternativ kann es vorgesehen sein, daß das Mobiltelefon 1 eine erste drahtgebundene Sendeschnittstelle 61 für Audiosignale umfaßt, die an den Massenspeicher 20 angeschlossen ist und an die eine Audiosignalsenke 65 anschließbar ist. Audiosignale können somit vom Massenspeicher 20 über die erste drahtgebundene Sendeschnittstelle 61 an die Audiosignalsenke 65 übertragen werden. Bei der Audiosignalsenke 65 kann es sich beispielsweise wieder um eine Stereoanlage handeln. Die Audiosignale des Massenspeichers 20 können somit an der Audiosignalsenke 65 gespeichert und/oder wiedergegeben werden.

Zusätzlich oder alternativ kann eine zweite drahtgebundene Sendeschnittstelle 62 für Videosignale im Mobiltelefon 1 vorgesehen sein, die ebenfalls an den Massenspeicher 20 angeschlossen ist und an die eine Videosignalsenke 70 anschließbar ist. Im Massenspeicher 20 gespeicherte Videosignale können somit über die zweite drahtgebundene Sendeschnittstelle 62 an die Videosignalsenke 70 übertragen und dort gespeichert und/oder wiedergegeben werden. Bei der Videosignalsenke 70 kann es sich beispielsweise wiederum um einen Fernsehtuner, einen Multimedia-Personal-Computer oder dergleichen handeln.

Zusätzlich oder alternativ kann das Mobiltelefon 1 eine dritte drahtgebundene Sendeschnittstelle 63 für Datensignale umfassen, die ebenfalls an den Massenspeicher 20 angeschlossen ist und an die eine Datensignalsenke 75 anschließbar ist. Im Massenspeicher 20 gespeicherte Datensignale können somit über die dritte drahtgebundene Sendeschnittstelle 63 an die Datensignalsenke 75 übertragen und dort gespeichert und/oder weiterverarbeitet und/oder wiedergegeben werden. Bei der Datensignalsenke 75 kann es sich beispielsweise wiederum um einen Personal-Computer handeln.

Die im Mobiltelefon 1 vorgesehenen drahtgebundenen Sendeschnittstellen 61, 62, 63 können zu einer gemeinsamen drahtgebundenen Sendeschnittstellengruppe 60 zusammengefaßt sein.

Das beschriebene Mobiltelefon 1 kann beispielsweise in der Sicherheits- oder Überwachungstechnik eingesetzt werden und zur Überwachung von Gebäuden, beispielsweise von Banken dienen. Mittels der Videoaufnahmevorrichtung 50 können dabei Videoinformationen aufgezeichnet und im Massenspeicher 20 zwischengespeichert werden. Je nach zur Verfügung stehender Bandbreite für eine Telekommunikationsverbindung über das Funktelekomunikationsnetz 10 zu einer Sicherheitszentrale, beispielsweise der Polizei oder der Feuerwehr werden dann die im Massenspeicher 20 gespeicherten Videoinformationen nach und nach an diese Sicherheitszentrale über die drahtlose Sendevorrichtung 55 und die Sendeantenne 90 an das Funktelekommunikationsnetz 10 abgesetzt.

In einer weiteren Anwendung kann das Mobiltelefon 1 für eine Videokonferenz eingesetzt werden. Nimmt der Benutzer des Mobiltelefons 1 an einer solchen Videokonferenz teil, so kann er durch die Videoaufnahmevorrichtung 50 und die Audioaufnahmevorrichtung 45 in Bild und Ton aufgenommen werden. Die resultierenden Video- und Audiosignale werden an den Massenspeicher 20 übertragen und dort zwischengespeichert. Je nach Bandbreite der Telekommunikationsverbindung über das Funktelekommunikationsnetz 10 zu den weiteren Teilnehmern der Videokonferenz werden dann die im Massenspeicher 20 zwischengespeicherten Video- und Audiosignale des Benutzers nach und nach an diese weiteren Teilnehmer über die drahtlose Sendevorrichtung 55 versendet. In diesem Fall ist eine echte Multimediaanwendung gegeben, da sowohl Video- als auch Audiosignale versendet werden, wobei auch eine gleichzeitige Versendung der Videosignale und der Audiosignale möglich ist. Der Massenspeicher 20 kann auch dazu verwendet werden, sämtliche Videosignale und Audiosignale, die zu einer Videokonferenz gehören, zu speichern und damit die gesamte Videokonferenz zu dokumentieren. Die gespeicherten Video- und Audiosignale stammen dabei sowohl vom Benutzer des Mobiltelefons 1 selbst und wurden von der Videoaufnahmevorrichtung 50 und der Audioaufnahmevorrichtung 45 aufgenommen, als auch von den anderen Teilnehmern der Videokonferenz, deren Video- und Audiosignale über das Funktelekommunikationsnetz 10 und die drahtlose Empfangsvorrichtung 5 an den Massenspeicher 20 übertragen wurden.

Für den Fall, daß das Mobiltelefon 1 auch Internetzugang aufweist, sei es über das Funktelekommunikationsnetz 10 oder über die dritte drahtgebundene Sendeschnittstelle 63 für Datensignale, kann es auch vorgesehen sein, Audio- und/oder Videosignale als Audio- und/oder Videodateien einer elektronischen Postnachricht, beispielsweise einem E-Mail anzuhängen und vom Massenspeicher 20 an einen Teilnehmer des Internets zu übertragen. Auch auf diese Weise wird eine Multimediaanwendung realisiert. Bei den Audio- und/oder Videosignalen kann es sich dabei ebenfalls um Informationen einer Videokonferenz handeln, die somit mittels eines E-Mail versendet werden.

Neben all diesen Multimediaanwendungen bleibt das Mobiltelefon 1 ein vollwertiges Telefon, wobei der Benutzer während einer Verwendung des Mobiltelefons 1 beispielsweise als Walkman, als Videorecorder oder als Datenrecorder über einen gerade eingehenden Anruf durch entsprechende Signalisierung mittels Tonruf informiert wird. Er kann dieses Gespräch dann durch entsprechende Eingabe an der Eingabeeinheit 95 annehmen und dadurch die bisherige Wiedergabe von im Massenspeicher 20 gespeicherten Signalen an der Wiedergabevorrichtung 15 unterbrechen. Er kann jedoch auch die bisherige Wiedergabe von im Massenspeicher 20 gespeicherten Signalen an der Wiedergabevorrichtung 15 fortsetzen und den eingehenden Ruf durch eine Anrufbeantwortervorrichtung 80 beantworten lassen, die er rechtzeitig vor Eingang des Rufes aktiviert hatte. Die Anrufbeantwortervorrichtung 80 nimmt den eingehenden Ruf automatisch entgegen und veranlaßt die Speicherung der vom rufenden Teilnehmer eingehenden Sprachsignale im Massenspeicher 20. Dazu ist die Anrufbeantwortervorrichtung 80 sowohl mit der drahtlosen Empfangsvorrichtung 5 als auch mit dem Massenspeicher 20 verbunden. Dank des Massenspeichers 20 kann ein Anrufbeantworter mit einer fast unbegrenzten Aufnahmekapazität im Vergleich zu herkömmlichen Anrufbeantwortern geschaffen werden. Die Anrufbeantwortervorrichtung 80 ist jedoch nur optional vorgesehen.

Bei Verwendung der Videoaufnahmevorrichtung 50 kann das Mobiltelefon 1 auch als Camcorder zur Speicherung von aufgezeichneten Videosignalen im Massenspeicher 20 genutzt werden. Zusätzlich und gleichzeitig mit den Videosignalen können über die Audioaufnahmevorrichtung 45 Audiosignale aufgezeichnet und in Zuordnung zu den von der Videoaufnahmevorrichtung 50 aufgezeichneten Videosignalen im Massenspeicher 20 abgespeichert werden.

Wird das Mobiltelefon 1 als Camcorder genutzt, so können über die Videoaufnahmevorrichtung 50 und die Audioaufnahmevorrichtung 45 einer oder mehrere vertonte Videoclips aufgezeichnet und im Massenspeicher 20 abgelegt werden. Eine Wiedergabe der entsprechenden Videosignale an der Anzeigevorrichtung 100 und der entsprechenden Audiosignale am Lautsprecher 105 kann zeitgleich oder zeitversetzt in beliebiger Wiederholung, veranlaßt durch entsprechende Eingabe an der Eingabeeinheit 95, erfolgen. Voraussetzung ist eine genügend große Anzeigevorrichtung 100, vorzugsweise in Form eines Displays. Die vertonten Videoclips können jedoch auch in der beschriebenen Weise von der drahtlosen Sendevorrichtung 55 an einen oder mehrere weitere Teilnehmer des Funktelekommunikationsnetzes 10 vom Massenspeicher 20 aus abgesetzt werden, wobei die vertonten Videoclips aus den entsprechend zugehörigen Video- und Audiosignalen bestehen, die im Massenspeicher 20 abgelegt sind. Die Audiosignale des oder der vertonten Videoclips können auch über die erste drahtgebundene Sendeschnittstelle 61 für Audiosignale an die Audiosignalsenke 65 übertragen werden. Die zugehörigen Videosignale können über die zweite drahtgebundene Sendeschnittstelle 62 für Videosignale an die Videosignalsenke 70 übertragen werden. Eine Speicherung und Wiedergabe der vertonten Videoclips ist somit auch an der Audiosignalsenke 65 und der Videosignalsenke 70 synchron möglich. Die Wiedergabe des oder der vertonten Videoclips an der Audiosignalsenke 65 und der Videosignalsenke 70 kann durch eine mit der Audiosignalsenke 65 und der Videosignalsenke 70 verbundene gemeinsame Steuerung synchronisiert werden. Eine solche Steuerung ist in der Figur nicht dargestellt. Die Synchronisierung zwischen Audiosignalsenke 65 und Videosignalsenke 70 ist in der Figur jedoch durch eine gemeinsame gestrichelte Umrandung symbolisiert.

Es kann auch vorgesehen sein, statt der zweiten drahtgebundenen Sendeschnittstelle 62 für Videosignale eine drahtgebundene Sendeschnittstelle für Video- und Audiosignale vorzusehen, so daß Audio- und Videosignale eines Videoclips auch direkt über eine einzige Schnittstelle vom Massenspeicher 20 an eine als Fernsehtuner ausgebildete Audio-/Videosignalsenke übertragen und dort wiedergegeben werden können. Auch kann die zweite drahtgebundene Empfangsschnittstelle 27 für Videosignale durch eine drahtgebundene Empfangsschnittstelle für Audio- und Videosignale ersetzt sein, die von einer beispielsweise als Fernsehtuner ausgebildeten Audio-/Videosignalquelle Audiound Videosignale empfängt und an den Massenspeicher 20 zur Abspeicherung weiterleitet.

Als Massenspeicher 20 kann auch ein aus der PDA-Technologie (Personal digital Assistant) bekannter Massenspeicher genutzt werden.

## Patentansprüche

1. Mobiles Telekommunikationsendgerät (1) mit einer drahtlosen Empfangsvorrichtung (5) zum Empfang von über ein Funktelekommunikationsnetz (10) übertragenen Signalen, insbesondere Audio-, Video- und/oder Datensignalen, und mit einer Wiedergabevorrichtung (15) zur Wiedergabe dieser Signale, wobei ein Massenspeicher (20) vorgesehen ist, dem die empfangenen Signale vor einer Wiedergabe zur Zwischenspeicherung zuführbar sind, wobei während einer Wiedergabe von im Massenspeicher (20) abgelegten Signalen eine Signalisierung eines am mobilen Telekommunikationsendgerät (1) eingehenden Rufes erfolgt, **dadurch gekennzeichnet, dass** eine Anrufbeantwortervorrichtung (80) vorgesehen ist, die in einem aktivierten Zustand den eingehenden Ruf automatisch entgegennimmt und Signale des eingehenden Rufes dem Massenspeicher (20) zuführt, wobei gleichzeitig im Massenspeicher abgelegte, und vom eingehenden Ruf unabhängige Signale an der Wiedergabevorrichtung wiedergegeben und Signale des eingehenden Rufes für eine spätere Wiedergabe im Massenspeicher gespeichert werden.

2. Mobiles Telekommunikationsendgerät (1) nach Anspruch 1, **dadurch gekennzeichnet, dass** vor der Speicherung im Massenspeicher (20) eine Komprimierung der empfangenen Signale erfolgt.

3. Mobiles Telekommunikationsendgerät (1) nach Anspruch 1 oder 2, **dadurch gekennzeichnet, dass** der Massenspeicher (20) als Festplatten- und/oder Bandspeicher ausgebildet ist.

4. Mobiles Telekommunikationsendgerät (1) nach Anspruch 1, 2 oder 3, **dadurch gekennzeichnet, dass** eine drahtgebundene Empfangsschnittstelle (25) zum Anschluss einer Audiosignalquelle (30), einer Videosignalquelle (35) und/oder einer Datensignalquelle (40) vorgesehen ist, über die Audio-, Video- und/oder Datensignale dem Massenspeicher (20) zuführbar und an der Wiedergabevorrichtung (15) wiedergebbar sind.

5. Mobiles Telekommunikationsendgerät (1) nach einem der vorherigen Ansprüche, **dadurch gekennzeichnet, dass** die empfangenen und speicherbaren Signale akustisch oder optisch an der Wiedergabevorrichtung (15) wiedergebbar sind.

6. Mobiles Telekommunikationsendgerät (1) nach einem der vorherigen Ansprüche, **dadurch gekennzeichnet, dass** eine Audioaufnahmevorrichtung (45), insbesondere ein Mikrofon, vorgesehen ist, mit der Audiosignale aufnehmbar sind, und dass die aufgenommenen Audiosignale vor einer Wiedergabe an der Wiedergabevorrichtung (15) im Massenspeicher (20) zwischenspeicherbar sind.

7. Mobiles Telekommunikationsendgerät (1) nach einem der vorherigen Ansprüche, **dadurch gekennzeichnet, dass** eine Videoaufnahmevorrichtung (50) vorgesehen ist, mit der Videosignale aufnehmbar sind, und dass die aufgenommenen Videosignale vor einer Wiedergabe an der Wiedergabevorrichtung (15) im Massenspeicher (20) zwischenspeicherbar sind.

8. Mobiles Telekommunikationsendgerät (1) nach einem der vorherigen Ansprüche, **dadurch gekennzeichnet, dass** eine drahtlose Sendevorrichtung (55) vorgesehen ist, über die im Massenspeicher (20) abgelegte Video-, Audio- und/oder Datensignale an das Funktelekommunikationsnetz (10) abgebbar sind.

9. Mobiles Telekommunikationsendgerät (1) nach einem der vorherigen Ansprüche, **dadurch gekennzeichnet, dass** eine drahtgebundene Sendeschnittstelle (60) zum Anschluss einer Videosignalsenke (65), einer Audiosignalsenke (70) und/oder einer Datensignalsenke (75) vorgesehen ist und dass der Videosignalsenke (65), der Audiosignalsenke (70) und/oder der Datensignalsenke (75) im Massenspeicher (20) abgelegte Video-, Audio- und/oder Datensignale zuführbar sind.

## Claims

1. Mobile telecommunications terminal (1) with a wire-free receiving apparatus (5) for reception of signals which are transmitted via a radio telecommunications network (10), in particular audio, video and/or data signals, and having a reproduction apparatus (15) for reproduction of these signals, with a bulk memory (20) being provided, to which the received signals can be supplied for temporary storage before reproduction, with an incoming call at the mobile telecommunications terminal (1) being signalled during reproduction by signals which are stored in the bulk memory (20), **characterized in that** a call answering apparatus (80) is provided which, in an activated state automatically receives the incoming call and supplies signals from the incoming call to the bulk memory (20), with signals which are stored in the bulk memory and are independent of the incoming call being reproduced at the same time on the reproduction apparatus, and signals from the incoming call being stored in the bulk memory for subsequent reproduction.

2. Mobile telecommunications terminal (1) according to Claim 1, **characterized in that** the received signals are compressed before being stored in the bulk memory (20).

3. Mobile telecommunications terminal (1) according to Claim 1 or 2, **characterized in that** the bulk memory (20) is a hard disk and/or tape memory.

4. Mobile telecommunications terminal (1) according to Claim 1, 2 or 3, **characterized in that** a wire-based receiving interface (25) is provided for connection of an audio signal source (30), of a video signal source (35), and/or of a data signal source (40), via which audio, video and/or data signals can be supplied to the bulk memory (20) and can be reproduced on the reproduction apparatus (15).

5. Mobile telecommunications terminal (1) according to one of the preceding claims, **characterized in that** the received signals which can be stored can be reproduced audibly or visually on the reproduction apparatus (15).

6. Mobile telecommunications terminal (1) according to one of the preceding claims, **characterized in that** an audio recording apparatus (45), in particular a microphone, is provided, by means of which audio signals can be recorded, and **in that** the recorded audio signals can be temporarily stored in the bulk memory (20) before being reproduced on the reproduction apparatus (15).

7. Mobile telecommunications terminal (1) according to one of the preceding claims, **characterized in that** a video recording apparatus (50) is provided, by means of which video signals can be recorded, and **in that** the recorded video signals can be temporarily stored in the bulk memory (20) before being reproduced on the reproduction apparatus (15).

8. Mobile telecommunications terminal (1) according to one of the preceding claims, **characterized in that** a wire-free transmission apparatus (55) is provided, via which video, audio and/or data signals which are stored in the bulk memory (20) can be emitted to the radio telecommunications network (10).

9. Mobile telecommunications terminal (1) according to one of the preceding claims, **characterized in that** a wire-based transmission interface (60) is provided for connection of a video signal sink (65), an audio signal sink (70) and/or a data signal sink (75), and **in that** the video signal sink (65), the audio signal sink (70) and/or the data signal sink (75) can be supplied with video, audio and/or data signals which are stored in the bulk memory (20).

## Revendications

1. Terminal de télécommunication mobile (1) comportant un dispositif de réception (5) sans fil pour recevoir des signaux transmis par un réseau de radiotélécommunication (10), en particulier des signaux audio, vidéo et/ou des signaux de données, et un dispositif de restitution (15) pour restituer ces signaux, avec une mémoire de masse (20) à laquelle les signaux reçus peuvent être acheminés pour les mémoriser temporairement avant de les restituer, un appel entrant étant signalé sur le terminal de télécommunication mobile (1) pendant que les signaux stockés dans la mémoire de masse (20) sont restitués,
**caractérisé en ce qu'**
on prévoit un dispositif de réponse aux appels (80) qui, à l'état activé, accepte automatiquement l'appel entrant et achemine à la mémoire de masse (20) les signaux de l'appel entrant, des signaux enregistrés en même temps dans la mémoire de masse et indépendants de l'appel entrant sont alors restitués sur le dispositif de restitution et des signaux de l'appel entrant sont mémorisés dans la mémoire de masse pour être restitués ultérieurement.

2. Terminal de télécommunication mobile (1) selon la revendication 1,
**caractérisé en ce que**
les signaux reçus sous soumis à une compression avant d'être mémorisés dans la mémoire de masse (20).

3. Terminal de télécommunication mobile (1) selon la revendication 1 ou 2,
**caractérisé en ce que**
la mémoire de masse (20) prend la forme de mémoire à disques fixes ou à bande magnétique.

4. Terminal de télécommunication mobile (1) selon la revendication 1, 2 ou 3,
**caractérisé en ce qu'**
une interface de réception (25) à fil destinée à raccorder une source de signaux audio (30), une source de signaux vidéo (35) et/ou une source de signaux de données (40), est prévue pour acheminer les signaux audio, vidéo et/ou les signaux de données à la mémoire de masse (20), et les restituer sur le dispositif de restitution (15).

5. Terminal de télécommunication mobile (1) selon l'une des revendications précédentes,
**caractérisé en ce que**
les signaux reçus et mémorisables peuvent être restitués optiquement ou acoustiquement sur le dispositif de restitution (15).

6. Terminal de télécommunication mobile (1) selon l'une des revendications précédentes,
**caractérisé en ce qu'**
un dispositif d'enregistrement audio (45), en particulier un microphone, est prévu pour enregistrer des signaux, et
les signaux audio enregistrés peuvent être mémorisés temporairement dans la mémoire de masse (20) avant d'être restitués sur le dispositif de restitution (15).

7. Terminal de télécommunication mobile (1) selon l'une des revendications précédentes,
**caractérisé en ce qu'**
un dispositif d'enregistrement vidéo (50) est prévu pour enregistrer des signaux vidéo, et
les signaux vidéo enregistrés peuvent être temporairement mémorisés dans la mémoire de masse (20) avant d'être restitués sur le dispositif de restitution (15).

8. Terminal de télécommunication mobile (1) selon l'une des revendications précédentes,
**caractérisé en ce qu'**
un dispositif d'émission (55) sans fil est prévu pour émettre les signaux vidéo, audio et/ou les signaux de données stockés dans la mémoire de masse (20), sur le réseau de radiotélécommunication (10).

9. Terminal de télécommunication mobile (1) selon l'une des revendications précédentes,
**caractérisé en ce qu'**
une interface d'émission (60) à fil est prévue pour raccorder un collecteur de signaux vidéo (65), un collecteur de signaux audio (70) et/ ou un collecteur de signaux de données (75),
et des signaux vidéo, audio et/ou des signaux de données enregistrés dans la mémoire de masse (20) peuvent être acheminés au collecteur de signaux vidéo (65), au collecteur de signaux audio (70) et/ou au collecteur de signaux de données (75).
